# DEMANDE DE BREVET EUROPEEN

(11) **EP 0 824 853 A1**
(43) Date de publication de la demande: **25.02.1998**
(21) Numéro de dépôt: 96870107.8
(22) Date de dépôt: 21.08.1996
(51) Int. Cl.: A01D 34/70

(54) **Perfectionnements aux bacs collecteurs de tondeuses à gazon du type "tondeuses à siège" ou "tondeuses autoportées"**

(71) Demandeur: Eurocraft N.V., 3080 Tervuren (BE)
(72) Inventeur: Meyerkort, Thies Ottmar, 3080 Tervuren (BE)
(74) Mandataire: Van Malderen, Michel

(57) **Abrégé**

Perfectionnements apportés aux bacs collecteurs de tondeuses à gazon du type "tondeuses à siège" ou "tondeuses autoportées", c'est-à-dire des tondeuses à gazon sur lesquelles l'opérateur est assis. Ce type de tondeuse à gazon comporte généralement un bac collecteur arrière destiné à recueillir l'herbe coupée.

Selon l'invention, le bac collecteur (3) comporte un équipement mobile (5) permettant l'ouverture du bac collecteur (3) vers le bas ou vers l'arrière à l'aide d'une commande (9) manoeuvrable depuis le siège de l'opérateur.

## Description

### Objet de l'invention

La présente invention porte sur des perfectionnements apportés aux bacs collecteurs de tondeuses à gazon, de préférence celles du type "tondeuses à siège" ou "tondeuses autoportées", c'est-à-dire des tondeuses à gazon sur lesquelles l'opérateur est assis. Ce type de tondeuse à gazon comporte généralement un bac collecteur arrière destiné à recueillir l'herbe coupée.

### Arrière-plan technologique

Lors de l'utilisation d'une tondeuse, l'opérateur est amené régulièrement à vider ce bac collecteur, ce qui jusqu'à présent s'effectue généralement d'une manière impliquant que l'opérateur fournisse un effort très important pour vider le bac collecteur. Cette opération est généralement difficile à exécuter, c'est-à-dire qu'elle exige beaucoup de force et que l'opérateur doit d'abord soulever tout le poids vers le haut.

### Buts visés par l'invention

Le but visé par l'invention est de réduire la force nécessaire à l'opération de vidange et de permettre à l'opérateur de vider le bac collecteur sans avoir à fournir un effort important.

### Eléments caractéristiques de l'invention

Selon l'invention, il est proposé que le bac collecteur soit vidé par l'arrière et/ou par le bas à l'aide d'une commande manoeuvrable depuis le siège de l'opérateur.

L'invention concerne plus précisément un bac collecteur destiné à être monté sur une tondeuse à gazon du type "tondeuse à siège" ou "tondeuse autoportée" caractérisé en ce que ledit bac collecteur comporte un équipement mobile permettant l'ouverture du bac collecteur vers le bas ou vers l'arrière à l'aide d'une commande manoeuvrable depuis le siège de l'opérateur.

Divers types de dispositifs peuvent être prévus à cet effet, qui relèvent de la même conception inventive telle que mentionnée ci-dessus.

Selon une première forme d'exécution préférée de l'invention, le bac collecteur à sa partie inférieure est d'un élément en forme de volet constitué d'une série de lamelles articulées, du type des lamelles utilisées dans des volets roulants, s'engageant latéralement dans des rails de guidage latéraux et équipés d'une commande manoeuvrable depuis le siège du conducteur de manière qu'un simple mouvement de traction provoque un déplacement du volet dans les rails de guidage en entraînant l'ouverture de la partie inférieure du bac collecteur, ce qui libère l'herbe qu'il contient vers le bas ou vers l'arrière.

Avantageusement, la commande est constituée par une poignée qui se présente sous forme d'une barre transversale de manière que l'opérateur puisse d'une seule main, et ceci aussi bien pour la main gauche que pour la main droite, ouvrir le bac collecteur.

Dans cette forme d'exécution, il est avantageux qu'un ressort équipe l'élément en forme de volet, de manière que, lorsque la poignée n'est pas actionnée, la fermeture soit automatique sous l'effet du ressort.

Un élément de verrouillage peut être prévu en complément.

Ceci empêche également que la porte ne s'ouvre accidentellement, par exemple en roulant dans un fossé.

En position fermée, l'extrémité de l'équipement mobile en forme de volet se glisse dans un logement en forme de gouttière empêchant ainsi toute perte accidentelle de l'herbe coupée.

De préférence, le bac collecteur présente une forme de fond qui est arrondie, évitant ainsi tout risque d'endommagement lorsqu'on roule sur une surface irrégulière.

Selon une seconde forme d'exécution préférée de l'invention, il est prévu au bas du bac collecteur une porte basculante entraînée par une commande, à nouveau sous forme d'une poignée, de préférence une barre transversale.

Lorsque la poignée est actionnée, la partie inférieure ou arrière du bac collecteur bascule, libérant ainsi l'ouverture permettant d'évacuer l'herbe coupée directement vers le bas.

A nouveau, cette porte peut être mise sous tension par un ressort de manière à obtenir un retour automatique lorsque la poignée est libérée et à éviter que la porte ne s'ouvre accidentellement, par exemple en roulant dans un fossé.

Egalement, dans cette forme d'exécution, une forme arrondie du fond est préférée pour éviter des endommagements lors d'une circulation sur des surfaces irrégulières.

Avantageusement, la porte du type mentionné est verrouillée en position fermée pour éviter que le poids de l'herbe ne provoque l'ouverture de ladite porte.

Le dispositif de verrouillage peut être actionné, aussi bien pour la fermeture que pour l'ouverture, à partir du siège du conducteur. On peut par exemple prévoir un bouton de commande de verrouillage et de déverrouillage sur la poignée.

Une troisième forme d'exécution consiste dans le fait qu'en plus d'une porte comme mentionné séparément, une lame en un matériau convenable, par exemple une lame métallique, est actionnée en même temps que l'ouverture de la porte vers l'arrière par la poignée de commande par exemple constituée par un levier. En d'autres mots, lorsque la poignée de commande est actionnée, un câble métallique provoque l'ouverture de la porte arrière articulée et simultanément pousse la lame métallique vers l'arrière du bac collecteur.

De cette manière, la lame métallique contribue à éjecter l'herbe coupée hors du collecteur.

Dans le mouvement inverse de la poignée de commande, par exemple en la relevant, celle-ci ferme la porte arrière et rétracte la lame vers le fond du bac collecteur, c'est-à-dire vers le tracteur.

Dans cette position, comme précédemment, le levier de commande est de préférence verrouillé de manière à éviter une ouverture accidentelle du bac collecteur.

Un bouton peut être prévu par exemple sur la poignée de commande.

Le mouvement de la lame est conçu de manière qu'elle gille vers l'arrière et qu'ensuite elle s'incline vers l'arrière à l'extrémité de sa course en vue d'obtenir une évacuation complète de l'herbe coupée.

L'avantage des trois formes d'exécution qui ont été décrites réside dans le fait que l'herbe tombe vers le bas à l'arrière de la tondeuse autoportée.

### Description de formes d'exécution préférées de l'invention

L'invention sera décrite à titre d'illustration en se référant aux trois formes d'exécution préférées de l'invention, étant bien entendu que cette description est donnée uniquement à titre d'illustration et sans caractère limitatif.

### Brève description des figures

- La figure 1: représente une vue latérale d'un tracteur équipé d'un bac collecteur conforme à une première forme d'exécution de l'invention.
- La figure 2: est une vue correspondante à la figure 1 en perspective.
- La figure 3: représente essentiellement la barre transversale de commande.
- La figure 4: représente une gouttière de réception du volet dans la position fermée du bac collecteur.
- La figure 5: représente une vue latérale d'une seconde forme d'exécution de l'invention.
- La figure 6: représente une vue en perspective de cette même forme d'exécution.
- La figure 7: représente une vue latérale d'une troisième forme d'exécution de l'invention.
- La figure 8: représente une vue correspondante en perspective.

Dans les différentes figures, des repères de référence identiques sont utilisés pour des éléments constitutifs identiques ou similaires.

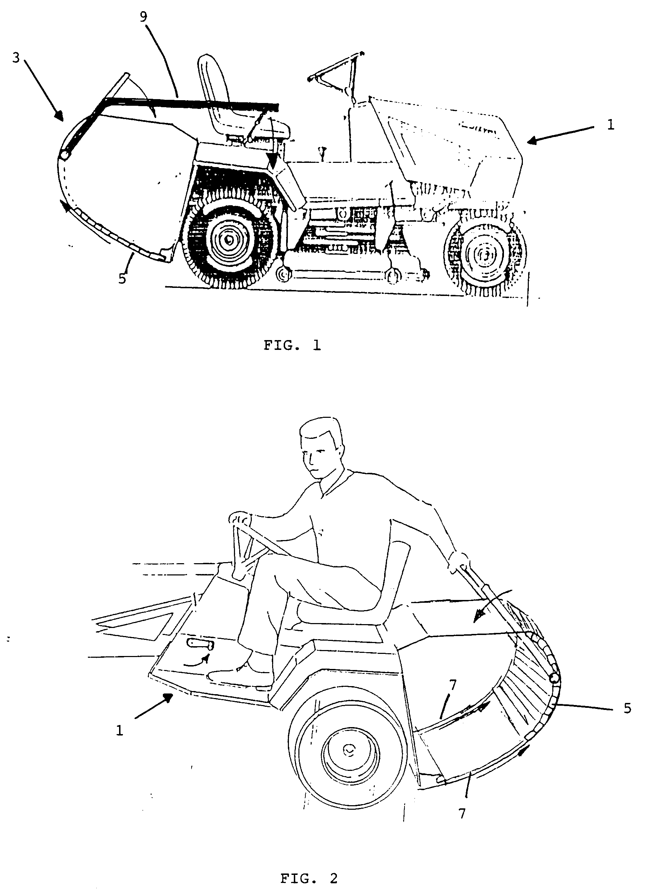

Dans la figure 1, on a représenté essentiellement un tracteur portant le repère général 1, équipé d'un bac collecteur portant le repère général 3.

Dans cette forme d'exécution, le fond du bac collecteur 3 est équipé d'un élément en forme de volet 5 constitué de lamelles articulées qui peuvent se déplacer dans des rails latéraux 7 sous l'action d'une commande 9 réalisée en l'occurrence sous forme d'une barre transversale qui, ainsi que l'indique la figure 2, peut être manipulée par un opérateur, aussi bien de la main gauche que de la main droite.

Par une traction exercée sur la barre de commande 9, le volet articulé 5 glisse dans les rails latéraux 7 en libérant ainsi le contenu du bac.

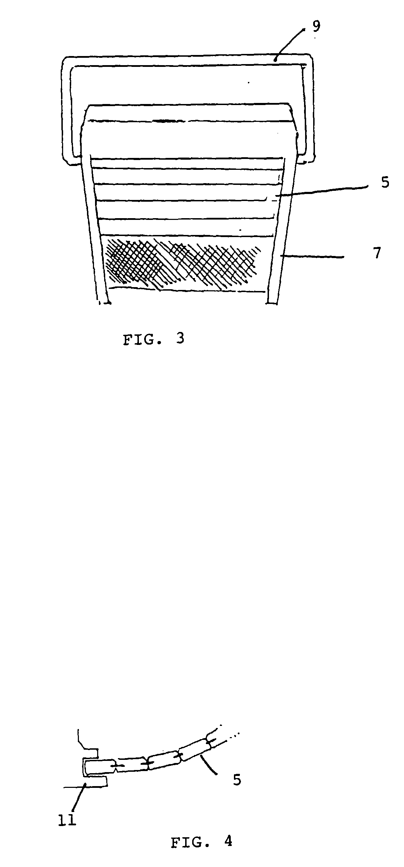

Dans la figure 4, on a représenté la manière dont le volet articulé 5 se glisse dans une gouttière de réception 11 en position fermée du volet équipant le bac collecteur.

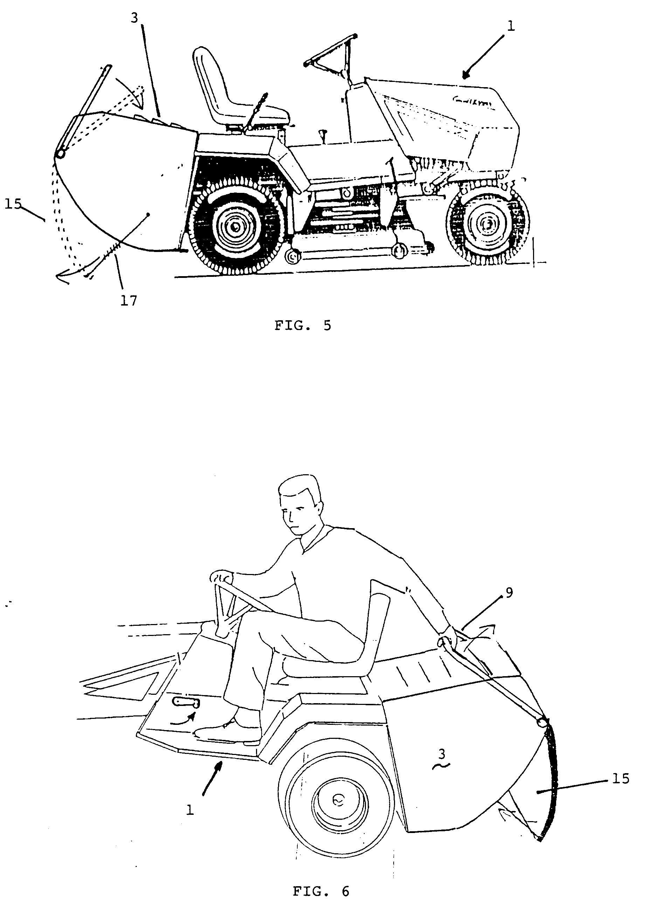

Une seconde forme d'exécution est représentée dans les figures 5 et 6.

Dans ce cas, le bac collecteur 6 est équipé d'une porte basculante 15 pourvue également d'une commande 9 manoeuvrable par l'opérateur depuis son siège.

Un ressort 17 est prévu de façon à maintenir automatiquement la porte en position fermée et des moyens complémentaires de verrouillage (non représentés) permettent de bloquer la porte en position verrouillée.

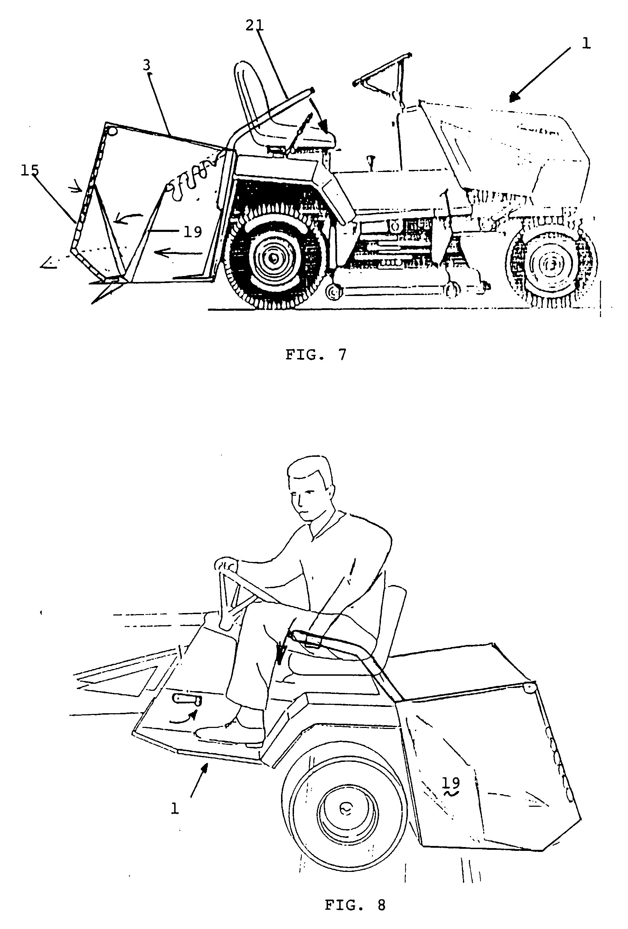

La forme d'exécution représentée aux figures 7 et 8 se différencie de celle de la figure 5 par le fait qu'en plus d'une porte articulée 15, il est prévu un dispositif en forme de lame 19 qui permet, sous l'action d'une poignée de commande 21, à la fois d'ouvrir la porte et de pousser la lame 19 selon un mouvement de basculement vers l'arrière de manière à évacuer la plus grande partie de l'herbe contenue dans le bac collecteur.

Bien que l'on ait décrit des formes d'exécution préférées de l'invention, il doit être bien entendu que de nombreuses variantes sont possibles tout en restant dans le cadre de l'invention.

C'est ainsi notamment que d'autres éléments complémentaires peuvent être ajoutés à titre d'équipement pour le bac collecteur et que des combinaisons des moyens décrits relèvent également de l'invention.

## Revendications

1. Bac collecteur destiné à être monté sur une tondeuse à gazon du type "tondeuse à siège" ou "tondeuse autoportée" (1) caractérisé en ce que ledit bac collecteur (3) comporte un équipement mobile (5 ou 15) permettant l'ouverture du bac collecteur (3) vers le bas ou vers l'arrière à l'aide d'une commande (9) manoeuvrable depuis le siège de l'opérateur.

2. Bac collecteur selon la revendication 1 caractérisé en ce qu'il comporte à sa partie inférieure un élément en forme de volet (5) constitué d'une série de lamelles articulées du type des lamelles utilisées dans les volets roulants, s'engageant latéralement dans des rails de guidage latéraux (7) et équipés d'une commande manoeuvrable depuis le siège du conducteur de manière qu'un simple mouvement de traction provoque un déplacement du volet (5) dans les rails de guidage (7) en entraînant l'ouverture de la partie inférieure du bac collecteur (3).

3. Bac collecteur selon la revendication 1 ou 2 caractérisé en ce qu'il comporte à la partie inférieure une porte basculante (15) pourvue d'une commande (9).

4. Bac collecteur selon la revendication 3 caractérisé en ce qu'il comporte une lame (19) en matériau convenable qui est actionnée en même temps que l'ouverture de la porte par la commande (9).

5. Bac collecteur selon l'une quelconque des revendications 1 à 4 caractérisé en ce que la commande (9) est constituée par une barre transversale, de manière que l'opérateur puisse d'une seule main, et ceci aussi bien pour la main gauche que pour la main droite, ouvrir le bac collecteur (3).

6. Bac collecteur selon l'une quelconque des revendications 1 à 5 caractérisé en ce que l'équipement mobile en forme de volet (5) ou de porte (15) comporte un ressort (17) de manière que lorsque la commande (9) n'est pas actionnée, la fermeture soit automatique sous l'effet du ressort (17).

7. Bac collecteur selon la revendication 6 caractérisé en ce que ladite commande (9) est équipée d'un élément de verrouillage.

8. Bac collecteur selon l'une quelconque des revendications 1 à 7 caractérisé en ce qu'il présente une forme de fond qui est arrondie, évitant ainsi tout risque d'endommagement lorsqu'on roule sur une surface irrégulière.

9. Bac collecteur selon l'une quelconque des revendications 1 à 8 caractérisé en ce que l'extrémité de l'équipement mobile en forme de volet (5) ou de porte (15) se glisse dans un logement (11) en forme de gouttière empêchant ainsi toute perte accidentelle de l'herbe coupée.
